# EUROPÄISCHE PATENTSCHRIFT

(11) **EP 4 094 716 B1**
(45) Veröffentlichungstag und Bekanntmachung des Hinweises auf die Patenterteilung: **09.07.2025**
(21) Anmeldenummer: 22178689.0
(22) Anmeldetag: 20.03.2020
(51) Int. Cl.: A61C 5/90

(54) **LIPPEN- UND WANGENEXPANDER**
LIP AND CHEEK EXPANDER
EXTENSEUR DE LÈVRES ET DE JOUES

(30) Priorität: 22.03.2019 DE 102019203970; 22.03.2019 DE 102019203954; 11.09.2019 DE 102019213802
(43) Veröffentlichungstag der Anmeldung: 30.11.2022
(62) Teilanmeldung aus: 20715779.3
(73) Patentinhaber: Ivoclar Vivadent AG, 9494 Schaan (LI)
(72) Erfinder: Horvath, Domonkos, 79796 Jestetten (DE)
(74) Vertreter: Baldus, Oliver

(56) Entgegenhaltungen:
- EP-A1- 1 709 935
- DE-A1- 102014 109 023
- US-A1- 2008 153 058

## Beschreibung

Die Erfindung betrifft einen verbesserten Lippen- und Wangenexpander in Form einer Abdeckvorrichtung zum Abdecken der Lippen und Mundwinkel und zum Abhalten der Lippen, Wangen und Mundwinkel von den Zahnreihen im Mund eines Patienten.

Abdeckvorrichtungen zum Abhalten der Lippen, Wangen und Mundwinkel von den Zahnreihen im Mund eines Patienten sind als Wangenabhalter, Abhaltehaken oder Spreizklammern bekannt. Weiterhin beschreibt die WO 03/051185 A1 sowie die DE 10 2014 109 023 A1 eine Vorrichtung, bei der nicht nur die Lippen, Wangen und Mundwinkel von den Zahnreihen im Mund eines Patienten abgehalten werden, sondern auch gleichzeitig die Lippen und Mundwinkel abgedeckt werden. Solche Vorrichtungen werden beispielsweise unter dem Markennamen OptraGate^{®} von der Firma Ivoclar Vivadent AG vermarktet und weisen zwei flexible Ringe als Spannrahmen auf, die über eine Abdeckfolie miteinander verbunden sind. Einer der beiden Spannrahmen wird komplett in das Vestibulum oris eingesetzt um die Abdeckfolie intraoral zu fixieren.

Die Druckschrift DE 10 2014 109 023 A1 betrifft ein Folienspannelement. Das Folienspannelement weist einen Lippenring und einen Vestibulärring auf.

Die Druckschrift US 2008/153058 A1 betrifft einen Lippen- und Wangenexpander zur Verwendung beim Ausführen dentalmedizinischer, dentalhygienischer oder dentaldokumentierender Tätigkeiten. Ein innerer Spannrahmen ist über die folienartige Mittel mit einem äußeren Spannrahmen verbunden.

Derartige Abdeckvorrichtungen dienen unter anderem dazu, dem Zahnarzt den Zugang zum Mundinnenraum zu erleichtern. Die Lippen des Patienten werden durch die kombinierte Wirkung von - ringförmigen - Spannelementen und einer sich zwischen diesen erstreckenden Folie aufgespreizt und auseinandergezogen, so dass die Mundöffnung wesentlich vergrößert ist, ohne dass der Patient den Mund weiter aufsperren muss.

Solche Abdeckvorrichtungen aus dem Stand der Technik führen häufig zu schmerzhaften Druckstellen an der Schleimhaut des Alveolarknochens, insbesondere im Bereich der Eckzähne, da das intraoral liegende Spannelement durch den starken Lippendruck an den Alveolarknochen angedrückt wird. Dies gilt insbesondere für den Unterkiefer, jedoch können solche Druckstellen ebenfalls am Oberkiefer auftreten.

Ein weiteres Problem der Herstellung der Lippen- und Wangenexpander, also in der hiesigen Diktion, der Abdeckvorrichtungen gemäß dem Stand der Technik, ist die Mehrzahl an Größen, die für die unterschiedlichen Mundgrößen der Patienten bereitgehalten werden muss. Die "Optragates" werden eingeschweißt geliefert. Aufgrund der besonderen Anforderungen an die Folie (Dehnbarkeit, Nachgiebigkeit, Materialstärke, Reißfestigkeit) ist die Haltbarkeit auch in eingeschweißtem Zustand begrenzt, und beträgt z.B. wenige Monate.

Dies führt dazu, dass regelmäßig beschaffte und gelagerte Optragates nach der maximalen Lagerzeit unbrauchbar werden und entsorgt werden müssen. Auch bei der Bereitstellung von lediglich 3 oder 4 Größen führt dies zu unnötigen Kosten und überflüssigen Entsorgungsproblemen.

Demgegenüber liegt der vorliegenden Erfindung die Aufgabe zugrunde, eine verbesserte gattungsgemäße Abdeckvorrichtung zu schaffen, bei der Druckstellen auf der Schleimhaut des Alveolarknochens verhindert oder deutlich verringert werden und somit der Tragekomfort bei der Vorrichtung deutlich erhöht ist, so dass die Akzeptanz der Abdeckvorrichtung erhöht ist, und/oder die Lagerkosten minimiert werden.

Die vorliegende Erfindung löst das ihr zugrunde liegende technische Problem durch eine Abdeckvorrichtung nach Anspruch 1.

Es ist eine Abdeckvorrichtung zum Abdecken der Lippen und Mundwinkel und zum Abhalten der Lippen, Wangen und Mundwinkel von den Zahnreihen im Mund eines Patienten mit einem elastischen Lippen-Spannelement zur äußeren Anlage an der Mundöffnung, mindestens einem elastischen Vestibulär-Spannelement zum Einlegen in das Vestibulum oris des Mundes des Patienten und einer die Spannelemente verbindenden Folie vorgesehen, wobei die Spannelemente entlang zweier gegenüberliegender Endbereiche der Folie angeordnet sind, so dass die eingesetzte Abdeckvorrichtung zur Mundhöhle hin offen ist. Bevorzugt setzt die Folie einem Verbiegen im Gegensatz zum Dehnen im wesentlichen keinen Widerstand entgegen. Zumindest ein intraoraler Abschnitt des Vestibulär-Spannelements ist geeignet, in elastisch verformtem Zustand in einen Bereich des Vestibulum oris des Patienten eingelegt zu werden und die Folie intraoral zu fixieren, so dass bei eingesetzter Abdeckvorrichtung die Folie zwischen dem extraoralen Lippen-Spannelement und dem im wesentlichen intraoralen Vestibulär-Spannelement in Anlage an die Lippen und Mundwinkel um diese herum verläuft und geeignet ist, im Wesentlichen gleichmäßig flächig verteilt Druckkräfte auf Lippen und Mundwinkel auszuüben, die die Lippen, Wangen und Mundwinkel von den Zähnen und dem Alveolarknochen wegdrücken und die Mundöffnung zirkulär in eine geöffnete Stellung vorspannen. Die Abdeckvorrichtung lässt auch in eingesetztem Zustand das Schließen des Mundes zu. Das Vestibulär-Spannelement weist mindestens einen Abschnitt auf, der bei eingesetzter Abdeckvorrichtung in sagittaler Richtung anterior des Vestibulum oris, insbesondere anterior der Umschlagfalte des Vestibulum oris, oder auch anterior des Lippenbändchens verläuft. Soweit hier von "anterior des Vestibulum oris" gesprochen wird, ist natürlich der tiefste Punkt des Vestibulum oris, also die Umschlagfalte gemeint.

Es ist vorgesehen, dass das Vestibulär-Spannelement mindestens einen zum Lippen-Spannelement hin, insbesondere also in Richtung anterior, gebogenen Abschnitt aufweist, der bei eingesetzter Abdeckvorrichtung insbesondere anterior der Umschlagfalte des Vestibulum oris und/oder anterior des Lippenbändchens verläuft.

Bevorzugt ist der mindestens einen Abschnitt des Vestibulär-Spannelements, der bei eingesetzter Vorrichtung in sagittaler Richtung anterior der Umschlagfalte des Vestibulum oris verläuft, ein in Richtung anterior gebogener, also sich näher zum Lippen-Spannelement hin erstreckender, Abschnitt.

Es zeigte sich überraschenderweise, dass eine entsprechende Formgebung des Vestibulär-Spannelements, bei der ein Abschnitt des Vestibulär-Spannelements so geformt ist, dass er in sagittaler Richtung anterior der Umschlagfalte des Vestibulum oris oder anteriro des Lippenbändchens verläuft und dabei bevorzugt in anteriorer Richtung gebogen ist, dazu führt, dass dieser Abschnitt nicht auf die Schleimhaut des Alveolarknochens drückt und somit an den entsprechenden Stellen Druckwunden und Reizungen verhindert werden und dennoch gleichzeitig die intraoral verlaufenden, demgegenüber verbleibenden Abschnitts, die Spannabschnitte des Vestibulär-Spannelements ausreichen, die Abdeckvorrichtung intraoral genügend zu fixieren. Dies gilt nicht nur für den geöffneten, sondern sogar für den geschlossenen Mund.

In einer bevorzugten Ausführungsform liegt der mindestens eine Abschnitt des Vestibulär-Spannelements bei eingesetzter Abdeckvorrichtung noch gerade intraoral oder extraoral oder dazwischen, z.B. auf der Lippe des Patienten auf, im Übergangsbereich zwischen intraoral und extraoral.

In einer bevorzugten Ausführungsform liegt insofern der mindestens eine Abschnitt des Vestibulär-Spannelements bei eingesetzter Vorrichtung auf der Lippe oder außerhalb der Lippe auf.

Wenn nicht anders erwähnt, wird unter dem "mindestens ein Abschnitt des Vestibulär-Spannelements" in der vorliegenden Beschreibung der Abschnitt des Vestibulär-Spannelements verstanden, der bei eingesetzter Abdeckvorrichtung in der Sagittalebene anterior der Umschlagfalte des Vestibulum oris verläuft und bevorzugt in Richtung anterior gebogen ist. Dieser Abschnitt des Vestibulär-Spannelements verläuft also nicht im tiefsten Bereich des Vestibulum oris, sondern verläuft durch die plastische Formgebung des Vestibulär-Spannelements versetzt zu dem Verlauf des Vestibulum oris, beispielsweise entlang der Lippe oder außerhalb der Lippe.

Es kann also vorgesehen sein, dass dieser Abschnitt, der als Einbuchtung ausgebildet ist, nicht im tiefsten Bereich des Vestibulum oris verläuft, aber am Innenbereich der Lippe anliegt und somit dennoch intraoral positioniert ist. Alternativ und bevorzugt kann vorgesehen sein, dass der mindestens eine Abschnitt extraoral verläuft. In dieser Ausführungsform weist das Vestibulär-Spannelement also mindestens einen intraoral verlaufenden Abschnitt und mindestens einen extraoral verlaufenden Abschnitt auf. In dieser Ausführungsform quert der Verlauf des Vestibulär-Spannelements also die Lippe, oder liegt zumindest auf dieser großflächig auf.

Insbesondere beim stark geöffneten Mund besteht die Gefahr eines Kontaktes zwischen dem Vestibulär-Spannelement und der Kieferschleimhaut.

Auch wenn z.B. in diesem Zustand die Schleimhaut der Lippe (ventrale Begrenzung des Vestibulum Oris), die Umschlagsfalte und die Schleimhaut der Kieferknochen (dorsale Begrenzung des Vestibulum Oris) eng aufeinander liegen, verhindert die Einbuchtung als Vorwölbung des Vestibulär-Spannelements und insbesondere auch ein Steg es, dass das Vestibulär-Spannelement im anterioren Bereich die Schleimhaut des Kieferknochens berührt. Daher können dort auch niemals Druckstellen verursacht werden.

Die Vorwölbung des Vestibulär-Spannelements verformt die elastische Lippe an dieser Stelle abhaltend, also in Richtung anterior.

Ein besonderer Vorteil ergibt sich darüber hinaus aus der Ausbildung der Einbuchtung an einer Stelle, an der die Abdeckvorrichtungen des Standes der Technik in die Umschlagfalte hineinragen und ggf. dort aufliegen: Durch die Einbuchtung wird die betreffende Stelle des Spannelements nach schräg oben bzw. zur Mundöffnung hin/anterior verlagert. Die Lippenschleimhaut ist dort sehr elastisch, so dass sie gerne nach anterior ausweicht, was das Spannelement weiter von der Alveolarfortsatz-Schleimhaut wegdrückt.

Unter einem "anterior gebogenen Abschnitt" wird bevorzugt verstanden, dass der Verlauf in Richtung des Lippen-Spannelements verläuft, da dieses bei der Abdeckvorrichtung im eingesetzten Zustand gänzlich außerhalb des Mundes und somit anterior des Vestibulär-Spannelements liegt. Unter dem "Lippen-Spannelement" wird das Spannelement verstanden, das vollständig extraoral positioniert wird. Unter dem "Vestibulär-Spannelement" wird das Spannelement verstanden, das zumindest teilweise intraoral positioniert wird.

Bevorzugt verläuft der mindestens eine Abschnitt des Vestibulär-Spannelements bei eingesetzter Abdeckvorrichtung im Bereich der Schneidezähne. Besonders bevorzugt verläuft der mindestens eine Abschnitt des Vestibulär-Spannelements bei eingesetzter Abdeckvorrichtung im Bereich der Eckzähne und der Schneidezähne.

Es zeigt sich, dass der Druck von Spannelementen aus dem Stand der Technik im Bereich der Eck- und Schneidezähne besonders groß ist und sich hier besonders schnell und besonders starke Druckwunden an der Schleimhaut bilden. Daher ist der mindestens eine Abschnitt des Vestibulär-Spannelements, der bei eingesetzter Abdeckvorrichtung im wesentlichen in sagittaler Richtung anterior der Umschlagfalte des Vestibulum oris verläuft, bevorzugt so positioniert, dass er im Bereich der Schneidezähne, besonders bevorzugt im Bereich der Schneide- und Eckzähne verläuft und so eine Druckentlastung an den ansonsten besonders stark belasteten Druckpunkten, der an den Alveolarknochen anliegenden Schleimhaut herbeiführt.

Der mindestens eine Abschnitt des Vestibulär-Spannelements und somit bevorzugt die gesamte Abdeckvorrichtung berührt bevorzugt in vorteilhafter Weise nicht die den Kieferknochen bedeckende Schleimhaut im Frontalbereich.

Es zeigte sich in überraschender Weise, dass es trotz dieser vorteilhaften Druckentlastung zu keiner Druckverstärkung an den anderen Bereichen des Vestibulär-Spannelements kommt, insbesondere nicht an den im Bereich des Vestibulum oris liegenden Bereichen.

Die nicht mit Knochen hinterlegten Schleimhautbereiche werden stärker für die Stütz- und Lagerfunktion der Abdeckvorrichtung herangezogen, was vom Patienten keineswegs als unangenehm empfunden wird.

Insofern die die Akzeptanz der Abdeckvorrichtung deutlich erhöht, was dem Zahnarzt eine bessere Zugänglichkeit des Behandlungsbereichs und weniger Zeitstress ermöglicht.

Wenn nur ein Abschnitt des Vestibulär-Spannelements vorgesehen ist, der bei eingesetzter Abdeckvorrichtung in im wesentlichen sagittaler Richtung anterior der Umschlagfalte des Vestibulum oris verläuft, also näher am Lippen-Spannelement, so kann dieser entweder im Bereich des Unterkiefers oder im Bereich des Oberkiefers positioniert sein. Bevorzugt ist dieser eine Abschnitt im Bereich des Unterkiefers positioniert, da hier die Entstehung von Druckwunden bei der Verwendung herkömmlicher Abdeckvorrichtungen stärker ist als im Oberkieferbereich. Natürlich kann wahlweise aber auch eine Positionierung im Oberkieferbereich vorgesehen sein.

In einer bevorzugten Ausführungsform verläuft der mindestens eine Abschnitt des Vestibulär-Spannelements bei eingesetzter Abdeckvorrichtung im Bereich der Schneidezähne des Unterkiefers.

In einer bevorzugten Ausführungsform weist das Vestibulär-Spannelement zwei Abschnitte auf, die bei eingesetzter Abdeckvorrichtung, insbesondere in sagittaler Richtung betrachtet, anterior der Umschlagfalte des Vestibulum oris verlaufen.

In einer bevorzugten Ausführungsform verläuft der mindestens eine Abschnitt des Vestibulär-Spannelements bei eingesetzter Abdeckvorrichtung im Bereich der Eckzähne und der Schneidezähne des Unterkiefers.

Bevorzugt ist vorgesehen, dass die Abdeckvorrichtung ein Vestibulär-Spannelement aufweist, das zwei Abschnitte aufweist, die bei eingesetzter Abdeckvorrichtung in im wesentlichen sagittaler Richtung anterior der Umschlagfalte des Vestibulum oris verlaufen, insbesondere die in Richtung anterior gebogen sind. Dabei verläuft bevorzugt der eine Abschnitt, der in sagittaler Richtung anterior der Umschlagfalte des Vestibulum oris verläuft, im Bereich der Schneidezähne, bevorzugt der Eck- und der Schneidezähne, des Unterkiefers und der andere Abschnitt, der bei eingesetzter Abdeckvorrichtung in sagittaler Richtung anterior der Umschlagfalte des Vestibulum oris verläuft, verläuft im Bereich der Schneidezähne, insbesondere im Bereich der Eck- und Schneidezähne, im Bereich des Oberkiefers.

In einer bevorzugten Ausführungsform verläuft bei eingesetzter Abdeckvorrichtung der erste Abschnitt im Bereich der Eckzähne und der Schneidezähne des Unterkiefers und der zweite Abschnitt verläuft im Bereich der Eckzähne und der Schneidezähne des Oberkiefers.

In einer weiteren bevorzugten Ausführungsform ist das Vestibulär-Spannelement als Spannrahmen, insbesondere als Spannring, ausgebildet ist, der plastisch dreidimensional geformt ist.

Durch die plastische dreidimensionale Formung kann der Verlauf des Vestibulär-Spannelements, wie wahlweise auch des Lippen-Spannelements, erreicht werden, wobei durch das elastische Material der Spannelemente diese noch so flexibel sind, dass die Abdeckvorrichtung im und am Mund verwendet werden kann.

In einer bevorzugten Ausführungsform ist das Vestibulär-Spannelement bei eingesetzter Abdeckvorrichtung im Bereich des mindestens einen Abschnitts 0 mm bis 30 mm vom Lippen-Spannelement entfernt.

In einer bevorzugten Ausführungsform ist das Vestibulär-Spannelement bei eingesetzter Abdeckvorrichtung 0 mm vom Lippen-Spannelement entfernt, die Spannelemente liegen also an ein oder zwei Punkten aneinander an oder sind an diesen ein oder zwei Punkten sogar miteinander verbunden.

In einer bevorzugten Ausführungsform ist das Vestibulär-Spannelement bei eingesetzter Abdeckvorrichtung im Bereich des mindestens einen Abschnitts mehr als 0 mm bis 30 mm vom Lippen-Spannelement entfernt. In einer bevorzugten Ausführungsform ist das Vestibulär-Spannelement bei eingesetzter Abdeckvorrichtung im Bereich des mindestens einen Abschnitts 0,1 mm bis 30 mm vom Lippen-Spannelement entfernt. In einer bevorzugten Ausführungsform ist das Vestibulär-Spannelement bei eingesetzter Abdeckvorrichtung im Bereich des mindestens einen Abschnitts höchstens 25 mm vom Lippen-Spannelement entfernt. In einer bevorzugten Ausführungsform ist das Vestibulär-Spannelement bei eingesetzter Abdeckvorrichtung im Bereich des mindestens einen Abschnitts höchstens 20 mm vom Lippen-Spannelement entfernt. In einer bevorzugten Ausführungsform ist das Vestibulär-Spannelement bei eingesetzter Abdeckvorrichtung im Bereich des mindestens einen Abschnitts höchstens 15 mm vom Lippen-Spannelement entfernt.

In einer bevorzugten Ausführungsform ist das Vestibulär-Spannelement bei eingesetzter Abdeckvorrichtung im Bereich des mindestens einen Abschnitts bis 30 mm vom Lippen-Spannelement entfernt.

In einer bevorzugten Ausführungsform weist das Lippen-Spannelement mindestens einen Abschnitt auf, der bei eingesetzter Abdeckvorrichtung in sagittaler Richtung in Richtung des mindestens einen Abschnitts des Vestibulär-Spannelements gekrümmt ist.

Ein solcher Abschnitt des Lippen-Spannelements liegt bei eingesetzter Abdeckvorrichtung bevorzugt oben oder unten, also im Bereich der Nase oder des Kinns. Dies hat den Vorteil, dass die Abdeckvorrichtung die Nase oder das Kinn nicht abdeckt. Bevorzugt liegt also dieser Abschnitt des Lippen-Spannelements gegenüber dem mindestens einen Abschnitt des Vestibulär-Spannelements.

In einer besonders bevorzugten Ausführungsform weist das Lippen-Spannelement zwei Abschnitte auf, die bei eingesetzter Abdeckvorrichtung in im wesentlichen sagittaler Richtung in Richtung des mindestens einen Abschnitts des Vestibulär-Spannelements gekrümmt sind, die also bevorzugt konkave Einbuchtungen sind.

Die beiden Abschnitte des Lippen-Spannelements liegen bei eingesetzter Abdeckvorrichtung bevorzugt oben und unten, also im Bereich der Nase oder des Kinns. Dies hat den Vorteil, dass die Abdeckvorrichtung die Nase und das Kinn nicht abdeckt. Bevorzugt liegen also diese Abschnitte des Lippen-Spannelements gegenüber den zwei Abschnitten des Vestibulär-Spannelements.

Somit nähern sich bevorzugt die Abschnitte des Vestibulär-Spannelements und des Lippen-Spannelements gegenseitig an. In einer bevorzugten Ausführungsform nähern sich diese Abschnitte auf einen Abstand von 0 mm bis 30 mm an, insbesondere von 0,5 mm bis 25 mm. In einer bevorzugten Ausführungsform können sich die Abschnitte auch treffen, haben also einen Abstand von 0 mm und können dabei besonders bevorzugt auch verbunden, insbesondere fest verbunden sein, was die Stabilität der Abdeckvorrichtung erhöht. Durch die Elastizität der Spannelemente bleibt die Abdeckvorrichtung dennoch für den Gebrauch flexibel genug. Trotz einer solcher Verbindung der Spannelemente bleibt die Abdeckvorrichtung zudem flexibel genug, um platzsparend verpackt zu werden.

In einer bevorzugten Ausführungsform bildet der mindestens eine Abschnitt des Vestibulär-Spannelements eine konkave Einbuchtung aus, wobei die konkave Einbuchtung zumindest teilweise von einer Folie überspannt wird.

In einer bevorzugten Ausführungsform bildet der mindestens eine Abschnitt des Lippen-Spannelements eine konkave Einbuchtung aus, wobei die konkave Einbuchtung zumindest teilweise von einer Folie oder der Folie überspannt wird.

Wenn die konkaven Ausbuchtungen der Spannelemente zumindest teilweise mit einer Folie überspannt sind, hat dies den Vorteil, dass trotz der dreidimensional geformten Spannelemente die Gesamt-Abdeckvorrichtung die Grundform der bisherigen Produkte beibehält und somit der Verbraucher nicht an eine neue Form gewöhnt werden muss.

In einer bevorzugten Ausführungsform hat die Abdeckvorrichtung die Form einer Röhre, bei der mindestens ein Ende der Röhre zwei konkave Einbuchtungen aufweist.

In einer weiteren bevorzugten Ausführungsform hat die Abdeckvorrichtung die Form einer Röhre mit zwei Enden, bei der mindestens das zweite Ende der Röhre zwei konkave Einbuchtungen aufweist.

Wenn die Spannelemente als Spannrahmen, insbesondere als Spannring, ausgestaltet sind, dann hat das Vestibulär-Spannelement bevorzugt einen größeren Durchmesser als das Lippen-Spannelement.

Bevorzugt sind unter "Folie" ein im weitesten Sinne flächige Gebilde zu verstehen, die einem Verbiegen im Gegensatz zum Dehnen im wesentlichen keinen Widerstand entgegensetzen. Solche Gebilde können auch als folienartige Mittel bezeichnet werden. Folienartige Mittel können aus elastisch dehnbarem, aber im Prinzip auch aus undehnbarem Material hergestellt sein.

Im Gegensatz zum Stand der Technik wird von Lippen- und Wangenexpandern auf die Lippen und Wangen, die von den Zahnreihen abzuhalten sind, über die folienartigen Mittel eine Druckkraft großflächig verteilt ausgeübt. Die folienartigen Mittel sind bevorzugt an einem Ende mit dem zumindest teilweise innerhalb der Mundhöhle befindlichen Vestibulär-Spannelement und am anderen Ende mit dem auf den Lippen bzw. Wangen außen anliegenden äußeren Lippen-Spannelement verbunden.

Es können auch zusätzliche weitere folienartige Mittel vorgesehen sein, die beispielsweise die Einbuchtungen im Lippen- und/oder Vestibulär-Spannelement zumindest teilweise abdecken.

Die folienartigen Abdeckmittel sind vorteilhaft dünn und elastisch ausgebildet. Im Zusammenspiel mit den zwei Spannelementen können sehr einfache, extrem flexible und breit anwendbare Lippen- und Wangenexpander, also Abdeckvorrichtungen, geschaffen werden. Beim Anlegen des Expanders werden von den folienartigen Mitteln Druckkräfte großflächig verteilt und zirkulär um die Mundöffnung aufgebaut. Dadurch kann für den Patienten auf bequeme Art die Mundöffnung zirkulär weit geöffnet gehalten und gleichzeitig die Lippen und Wangen sanft von den Zahnreihen abgehalten werden.

Darüber hinaus kann bei der bevorzugten dreidimensionalen Formgebung auch des Lippen-Spannelements in vorteilhafter Weise verhindert werden, dass die Folie störend die Nase abdeckt.

Dem Fachmann sind geeignete Materialien für die Spannelemente und die Folie bekannt, beispielsweise aus der WO 03/051185 A1 oder der DE 10 2014 109 023 A1, auf welche beiden Druckschriften in diesem Zusammenhang vollinhaltlich Bezug genommen wird. Ein bevorzugtes Material ist Kunststoff. Bevorzugt können die Abdeckvorrichtungen im Spritzgussverfahren oder durch 3D-Druck hergestellt werden.

Materialstärke und Materialform, also der Querschnitt der Spannelemente, insbesondere des Vestibulär-Spannelements, können vom Fachmann frei gewählt werden. Es kann auch vorgesehen sein, dass die Materialstärke und die Materialform der Spannelemente, insbesondere des Vestibulär-Spannelements, über deren Verlauf variiert. Durch eine Variation kann der Fachmann die Biegsamkeit eines Spannelements in bestimmten Bereichen beeinflussen, also verstärken oder schwächen.

In einer alternativen Ausführungsform kann das Vestibulär-Spannelement zum intraoralen Absaugen verwendet werden. Dabei kann beispielsweise das Vestibulär-Spannelement als hohle Röhre ausgebildet sein, die in den Bereichen, die intraoral positioniert sind, Öffnungen aufweist, durch die die Mundflüssigkeit abgesaugt werden kann. Die Flüssigkeit kann dann beispielsweise über einen Steg, der bevorzugt das Vestibulär-Spannelement mit dem Lippen-Spannelement verbindet, abgeleitet werden, wenn dieser Steg ebenfalls röhrchenförmig ausgebildet ist. Durch diese Ausführungsform kann in vorteilhafter Weise die Notwendigkeit der Verwendung eines Saugers reduziert werden, beziehungsweise auf die Verwendung eines Saugers verzichtet werden.

In einer bevorzugten Ausführungsform ist das Vestibulär-Spannelement mit dem Lippen-Spannelement über mindestens einen Steg, insbesondere über einen Steg oder über zwei Stege, verbunden. Bevorzugt verläuft der mindestens eine Steg in mindestens einer konkaven Einbuchtung des Vestibulär-Spannelements.

Bevorzugt ist dabei eine Ausführungsform, bei der die beiden konkaven Ausbuchtungen des Vestibulär-Spannelements über einen Steg mit dem Lippen-Spannelement verbunden sind. In der bevorzugten Ausführungsform sind zwei Stege oder sogar mehrere Stege vorgesehen. Es ist aber auch möglich, lediglich einen Steg zu verwenden.

Derartige Stege können entweder aus dem Folienmaterial bestehen, oder aus einem hierfür geeigneten anderen Material.

Als Stege können auch Rippen realisiert werden. Diese können kurzerhand durch eine rippenförmige Verdickung des Materials der Folie ausgebildet werden. Diese können auch gekrümmt verlaufen, um den Zugwiderstand und die Festigkeit der Folie in besonderer Weise an den Stellen, an denen die Rippen ausgebildet sind, zu erhöhen.

Die Stege sind bevorzugt biegbar, aber im Vergleich mit der Folie weniger dehnbar. Die Stege können in vorteilhafter Weise ein Rutschen des inneren Rings auf das Zahnfleisch und den damit verbundenen Druckschmerz weiter verhindern. Das Lippen-Spannelement ist bevorzugt stabiler und zieht in vorteilhafter Weise das Lippen-Spannelement über die nicht dehnbaren Stege vom Zahnfleisch weg. Die Stege können in vorteilhafter Weise eine Dehnung der Folie im mittleren Lippenbereich verhindern, so dass eine Dehnung primär in den Seitenbereichen stattfindet. Die Breite der Stege kann der Fachmann frei wählen. Alternativ zu den Stegen können auch Rillen oder Bänder vorgesehen sein, und die nicht dehn- oder stauchbaren Stege können einen Abstand der beiden Ringe im Frontbereich von beispielsweise 18 mm bis 20 mm definieren.

Gemäß einem weiteren Aspekt ist es vorgesehen, dass das Vestibulär-Spannelement vier nach außen weisende Ausbuchtungen aufweist, die gegenüber einem Spitzoval oder Oval konvex nach außen vorspringen, und dass die Form des Vestibulär-Spannelements gegenüber dem Spitzoval oder Oval inkongruent oder geometrisch unähnlich ist. Diese Lösung erlaubt es überraschend, mit wesentlich weniger Größen der Abdeckvorrichtung auszukommen, und damit die Lagerhaltung zu vereinfachen und die zugehörigen Kosten zu minimieren.

Der Mund eines Patienten in halbgeöffnetem Zustand bildet ein Spitzoval, also ein spitzes Oval oder ein Oval, das an seinen Schmalseiten zugespitzt ist. Mit den vorstehend genannten Merkmalen ist das Vestibulär-Spannelement in einer Weise formverschieden vom Mund des Patienten, dass mit einer Abdeckvorrichtung auch sehr unterschiedliche Mundgrößen abgedeckt werden können.

Damit sind die Lagerkosten nicht nur wesentlich reduziert, sondern auch die Herstellkosten, denn es lediglich erforderlich, ein Spritzgusswerkzeug herzustellen, und nicht 3 oder 4.

Es sind Ausbuchtungen des Vestibulär-Spannelements gegenüber der Kreisform radial nach außen vorgesehen. Die Ausbuchtungen haben je selbst eine runde Außenform mit einem Radius, der kleiner als der Radius eines Standard-Vestibulärringes ist, beispielsweise zwischen 0,1 cm und 5 cm, bevorzugt 2 bis 3 cm. Dieser Radius kann auch in einer beliebigen anderen Weise gewählt werden, z.B. zwischen 0,3 cm und 4 cm, aber auch zwischen 0,8 cm und 2,5 cm.

Das in dieser Ausprägung vorgesehene Vestibulär-Spannelement ist insofern der Rechteckform angenähert und erscheint bevorzugt wie ein Rechteck mit abgerundeten Ecken.

Die gegenüber dem Mundoval gegenläufige Linienführung stellt insofern eine Besonderheit dar. Die divergierenden Bereiche, besonders die Ausbuchtungsecken, dienen der Abstützung des Vestibulär-Spannelements innen am Mund des Patienten. Die kritischen Bereiche in der Sagittalebene, also der Bereich der Lippenbändchen, und in der Horizontalebene werden bewusst vermieden, dort wird bewusst kein Abstützdruck ausgeübt.

Die "Stützbereiche" des Vestibulär-Spannelements an den Ausbuchtungsecken, also links/oben, links/unten, rechts/oben und rechts/unten liegen innen im Mund an und geben auch dann Halt, wenn die Größe des Spannelements für den Mund des Patienten recht groß oder recht klein ist.

Wenn das Spannelement für den Patienten recht groß ist, wandert die Ausbuchtungsecke innen an der Wange entlang Richtung distal. Wenn das Spannelement recht klein ist, stützen die Ausbuchtungsecken immer noch ab, aufgrund der Formverschiedenheit oder Inkongruenz zum Oval oder Spitzoval einer Mundöffnung.

So können mehrere Optragate-Größen abgedeckt werden.

Es ist bevorzugt, das Vestibulär-Spannelement so zu formen, dass es an 4 Stellen, also oben rechts, unten rechts, unten links und oben links anliegt, um das Herausrutschen zu verhindern. Es ist aber auch möglich, die Anzahl dieser Stellen zu variieren, und z.B. 2, 3, 5 oder 6 Stellen vorzusehen.

Es käme auch ein Anliegen außerhalb der hier beschriebenen Bereiche oder Stellen in Betracht.

Das zugehörige Lippen-Spannelement kann auch in gleicher Weise geformt sein, also zum Vestibulär-Spannelement kongruent, oder auch oval oder kreisförmig

Ein besonderer Vorteil dieser Ausführungsform mit den Ausbuchtungsecken ist es auch, dass die Aufspreizwirkung besonders seitlich nach außen wirkt. Die für das Scannen wichtigen vestibulären Bereiche an den Molaren werden dadurch besonders gut zugänglich.

Ein Scankopf kann dann besonders gut seitlich eingeführt werden, um den Vestibulärbereich der Molaren zu scannen, da dort großzügig Räume freigelassen werden.

Die Ausbuchtungen sollten bevorzugt rund sein, der optimale Radius oder ggf. Kurvenverlauf kann in weiten Bereichen an die Erfordernisse angepasst werden.

Durch den gebogenen Abschnitt geht an der dortigen Einbuchtung Retention verloren. Vorteilhaft wird dies durch die Ausbuchtungen an anderer Stelle, den "Flügeln" oder "Ohren", also den Ausbuchtungsecken, kompensiert.

Gemäß einer vorteilhaften Ausgestaltung dieser Lösung ist das Vestibulär-Spannelement um eine vertikale Achse, die posterior dieses Spannelements liegt, leicht gekrümmt. Bei kleineren Mundöffnungen verlagern sich Ausbuchtungsecken in den nachgiebigen Wangenbereich nach distal. Die Ausbuchtungsecken finden aber bei größeren Mundöffnungen dennoch Halt.

Eine Abdeckvorrichtung dient zum Abdecken der Lippen und Mundwinkel und zum Abhalten der Lippen, Wangen und Mundwinkel von den Zahnreihen im Mund eines Patienten mit einem elastischen Lippen-Spannelement zur äußeren Anlage an der Mundöffnung, mindestens einem elastischen Vestibulär-Spannelement zum Einlegen in das Vestibulum oris des Mundes des Patienten und einer die Spannelemente verbindenden Folie, wobei die Spannelemente entlang zweier gegenüberliegender Endbereiche der Folie angeordnet sind, so dass die eingesetzte Abdeckvorrichtung zur Mundhöhle hin offen ist, wobei:
die Folie einem Verbiegen im Gegensatz zum Dehnen im Wesentlichen keinen Widerstand entgegensetzt, und zumindest ein intraoralen Abschnitt des Vestibulär-Spannelements geeignet ist, in elastisch verformtem Zustand in einen Bereich des Vestibulum oris des Patienten eingelegt zu werden und die Folie intraoral zu fixieren, so dass bei eingesetzter Abdeckvorrichtung die Folie zwischen dem extraoralen Lippen-Spannelement und dem Vestibulär-Spannelement in Anlage an die Lippen und Mundwinkel um diese herum verläuft und geeignet ist, im Wesentlichen gleichmäßig flächig verteilt Druckkräfte auf Lippen und Mundwinkel auszuüben, die die Lippen, Wangen und Mundwinkel von den Zähnen und dem Alveolarknochen wegdrücken und die Mundöffnung zirkulär in eine geöffnete Stellung vorspannen, wobei die Abdeckvorrichtung das Schließen des Mundes zulässt, und
wobei das Vestibulär-Spannelement mit dem Lippen-Spannelement über mindestens einen Steg, insbesondere über einen Steg oder über zwei Stege, verbunden ist.

Gemäß einer ersten bevorzugten Ausführungsform ist es vorgesehen, dass das Lippen-Spannelement und/oder die Folie eine Kraft auf das Vestibulär-Spannelement ausüben, durch die der Anpressdruck des Vestibulär-Spannelements auf die den Alveolarknochen bedeckende Mukosa verringert wird.

Gemäß einer zweiten bevorzugten Ausführungsform ist es vorgesehen, dass das bei eingesetzter Abdeckvorrichtung das Vestibulär-Spannelement zumindest teilweise flächig an der den Alveolarknochen bedeckenden Mukosa anliegt.

Gemäß einer dritten bevorzugten Ausführungsform ist es vorgesehen, dass das Lippen-Spannelement eine größere Materialstärke aufweist als das Vestibulär-Spannelement.

Gemäß einer vierten bevorzugten Ausführungsform ist es vorgesehen, die Folie mindestens eine zwischen dem Lippen-Spannelement und dem Vestibulär-Spannelement verlaufenden rippenförmige Erhöhung aufweist, insbesondere eine Riffelung, aufweist.

Gemäß einer fünften bevorzugten Ausführungsform ist es vorgesehen, dass die Folie im Bereich des Lippen-Spannelements eine größere Materialdicke aufweist als im Bereich des Vestibulär-Spannelements.

Gemäß einer sechsten bevorzugten Ausführungsform ist es vorgesehen, dass das Lippen-Spannelement weniger elastisch ist als das Vestibulär-Spannelement.

Gemäß einer siebten bevorzugten Ausführungsform ist es vorgesehen, dass in nicht gespanntem Zustand die Folie eine Länge zwischen dem Lippen-Spannelement und Vestibulär-Spannelement von höchstens 2 cm hat.

Gemäß einer achten bevorzugten Ausführungsform ist es vorgesehen, dass die Folie an dem Vestibulär-Spannelement an dem Bereich oder der Fläche des Vestibulär-Spannelements befestigt ist, die in Richtung des Lippen-Spannelements zeigt oder an der Fläche des Vestibulär-Spannelements befestigt ist, die den größten Durchmesser aufweist, oder dazwischen.

Gemäß einer neunten bevorzugten Ausführungsform ist es vorgesehen, dass das Vestibulär-Spannelement nach der Herstellung keinen Anguss an der Fläche aufweist, die nach dem Einlegen des Vestibulär-Spannelements in das Vestibulum oris des Mundes des Patienten an der den Alveolarknochen bedeckenden Mukosa anliegt.

Bevorzugte Ausführungsformen ergeben sich auch aus den Unteransprüchen.

Die vorliegende Erfindung wird anhand der folgenden Figuren und Beispiele näher erläutert, ohne dass diese einschränkend zu verstehen wären.
Figur 1 zeigt eine Abdeckvorrichtung in einer Ausführungsform;
Figur 2 zeigt die Seitenansicht der Abdeckvorrichtung aus Figur 1;
Figur 3 zeigt die beiden Spannelemente der Abdeckvorrichtung aus Figur 1;
Figur 4 zeigt eine alternative Abdeckvorrichtung;
Figur 5 zeigt die Seitenansicht der Abdeckvorrichtung aus Figur 4;
Figur 6 zeigt die beiden Spannelemente der Abdeckvorrichtung aus Figur 4;
Figur 7 zeigt eine weitere alternative Abdeckvorrichtung;
Figur 8 zeigt die Seitenansicht der Abdeckvorrichtung aus Figur 7;
Figur 9 zeigt die beiden Spannelemente der Abdeckvorrichtung aus Figur 7;
Figur 10 zeigt die beiden Spannelemente in einer weiteren Ausführungsform;
Figur 11 zeigt einen Vergleich der Abdeckvorrichtung mit einer Abdeckvorrichtung aus dem Stand der Technik während der Verwendung;
Figur 12 zeigt die Abdeckvorrichtung aus Figur 1 mit Stegen;
Figur 13 zeigt die Seitenansicht der Abdeckvorrichtung aus Figur 12;
Figur 14 zeigt die Abdeckvorrichtung aus Figur 4 mit Stegen;
Figur 15 zeigt eine Abdeckvorrichtung mit Stegen während der Verwendung;
Figur 16 zeigt eine weitere Abdeckvorrichtung in schematischer Ansicht;
Figur 17 zeigt die Ausführungsform gemäß Figur 16 in der praktischen Anwendung.

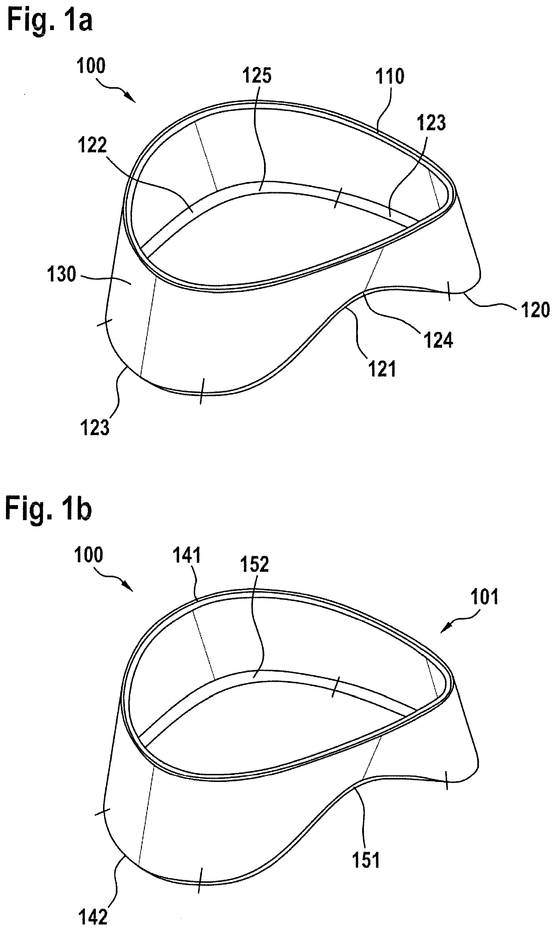

Figur 1 zeigt eine Abdeckvorrichtung. In Figur 1a ist die Abdeckvorrichtung (100) zu sehen, die aus einem - als Spannring ausgeformten - Lippen-Spannelement (110), einem Vestibulär-Spannelement (120) und eine Folie (130) besteht. Während das Lippen-Spannelement (110) von der plastischen Formgebung her zumindest nahezu eben ist, auch wenn es aus einem flexiblen Material besteht und somit biegsam ist, hat das Vestibulär-Spannelement (120) eine dreidimensionale Grundform mit zwei Abschnitten (121,122), die in Richtung des Lippen-Spannelements (110) gerichtet sind und dadurch die Abdeckvorrichtung in diesem Bereich verjüngen beziehungsweise jeweils konkave Einbuchtungen (124,125) bilden. Die gebogenen Abschnitte (121, 221, 321) können zwischen 10 Prozent und 60 Prozent des Umfangs des Vestibulär-Spannelements (120, 220, 320) einnehmen, aber auch zwischen 20 und 50 Prozent. Ein bevorzugter Wert kann etwa 40 Prozent sein. Der Umfang kann z.B. 30 cm betragen, und die aufsummierte Länge beider Einbuchtungen 124,125 14 cm, also zwischen 40 und 50 Prozent.

Wenn nun die Abdeckvorrichtung (100) verwendet wird, wird das Vestibulär-Spannelement (120) in den Mund eingeführt, so dass die beiden Bereiche oder Spannabschnitte (123) des Spannelements (120) im Bereich der Molaren in das Vestibulum oris einliegen und an der Wange anliegen. Durch die gezeigte Formgebung liegen dagegen die weiteren Bereiche (121, 122) nicht im Vestibulum oris, sondern verlaufen in sagittaler Richtung anterior des Vestibulum oris. Dabei kann je nach Formgebung der Verlauf der anterior gebogenen Abschnitte (121 und 122) intraoral entlang der Lippe oder extraoral vorgesehen sein. Durch diesen Verlauf außerhalb des Vestibulums oris wird im Frontalbereich, also im Bereich der Eckzähne und der Schneidezähne ein Druck auf die am Kieferknochen anliegende und von diesem getragene Schleimhaut und somit entsprechende Druckwunden verhindert.

Figur 1b zeigt dieselbe Abdeckvorrichtung (100), wobei das Augenmerk auf die grundsätzliche Ausgestaltung in Form einer Röhre (101) mit zwei Enden (141,142) gelegt werden soll, wobei die Enden durch besagte Spannelemente gebildet werden und wobei das zweite Ende (142) der Röhre (101) zwei konkave Einbuchtungen (151,152) aufweist.

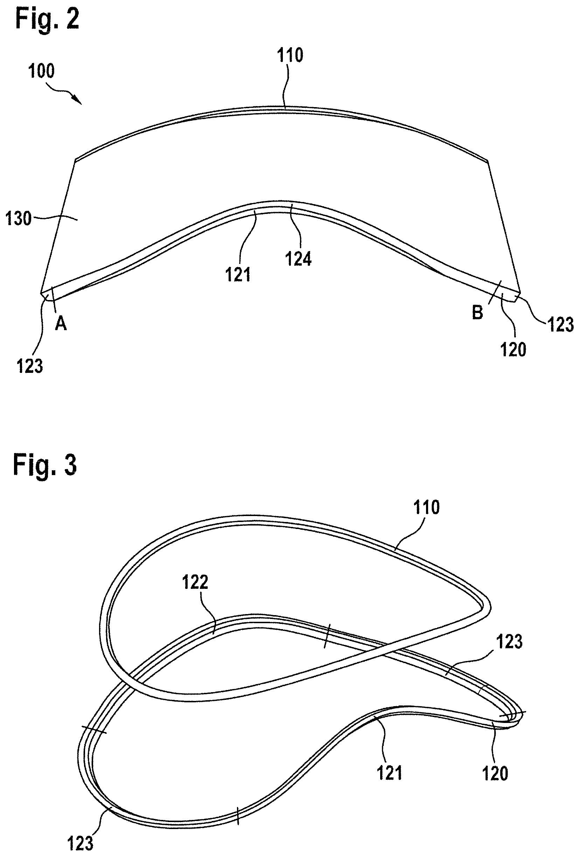

Figur 2 zeigt die Abdeckvorrichtung (100) aus Figur 1 in der Seitenansicht. Zu sehen sind wieder die beiden Spannelemente (110,120) mit der dazwischen liegenden Folie (130). Das Vestibulär-Spannelement hat neben den beiden intraoralen Spannabschnitten (123) einen zwischen den Punkten A und B verlaufenden Abschnitt (121), der eine konkave Einbuchtung (124) bildet und somit einen Richtung anterior gebogenen Abschnitt darstellt, der bei eingesetzter Abdeckvorrichtung in sagittaler Richtung anterior der Umschlagfalte des Vestibulum oris verläuft.

Figur 3 zeigt die beiden Spannelemente (110,120) der Abdeckvorrichtung aus den Figuren 1 und 2. Das Vestibulär-Spannelement (120) ist in vier Abschnitte aufgeteilt, zwei intraorale Spannabschnitte (123) und zwei anterior gebogene Abschnitte (121,122).

Dabei ist die Bezeichnung "anterior" dahingehend zu verstehen, dass der Verlauf in Richtung des Lippen-Spannelements (110) verläuft, da dieses bei der Abdeckvorrichtung im eingesetzten Zustand gänzlich außerhalb des Mundes und somit anterior des Vestibulär-Spannelements (120) liegt.

Der am meisten anterior liegende Punkt der Abschnitte (121,122) des Vestibulär-Spannelements (120) hat bei planer aber ungestraffter und ungespannter Folie einen Abstand von etwa 20 mm zu dem Lippen-Spannelement (110).

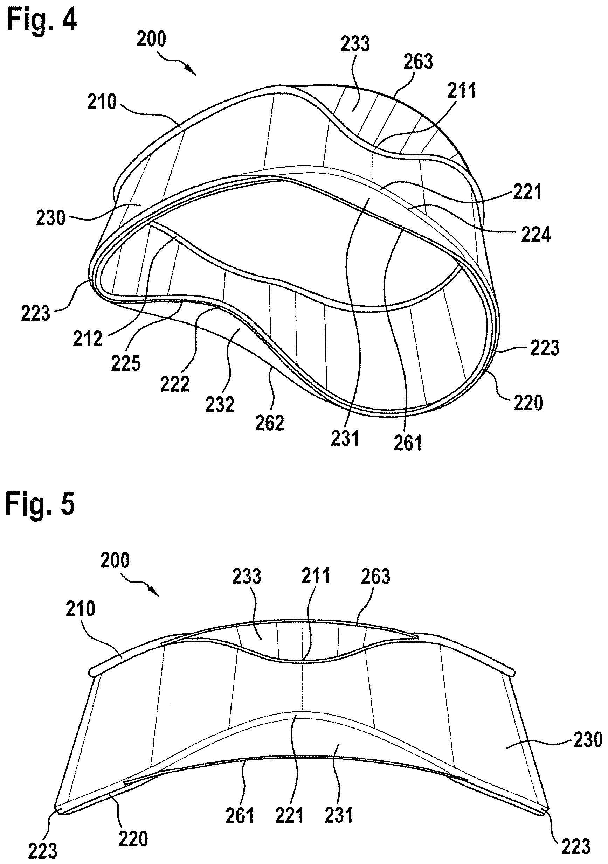

Figur 4 zeigt eine alternative Ausführungsform der Abdeckvorrichtung (200), die wieder Lippen-Spannelement (210), ein Vestibulär-Spannelement (220) und eine Folie (230) umfasst. Das Vestibulär-Spannelement (220) hat wieder eine dreidimensionale Grundform mit zwei Abschnitten (221,222), die in Richtung des Lippen-Spannelements (210) gerichtet sind und dadurch die Abdeckvorrichtung in diesem Bereich verjüngen beziehungsweise dort jeweils konkave Einbuchtungen (224,225) bilden.

Wenn nun die Abdeckvorrichtung (200) verwendet wird, wird das Vestibulär-Spannelement (220) in den Mund eingeführt, so dass die beiden Bereiche oder Spannabschnitte (223) des Spannelements (220) im Bereich der Molaren in das Vestibulum oris einliegen und an der Wange anliegen. Durch die gezeigte Formgebung liegen dagegen die weiteren Bereiche (221, 222) nicht im Vestibulum oris, sondern verlaufen in sagittaler Richtung anterior des Vestibulum oris. Dabei kann je nach Formgebung der Verlauf der anterior gebogenen Abschnitte (221 und 222) intraoral entlang der Lippe oder extraoral vorgesehen sein.

Zusätzlich hat auch das Lippen-Spannelement (210) eine dreidimensionale Grundform mit zwei Abschnitten (211,212), die in Richtung des Vestibulär-Spannelements (220) gerichtet sind und dadurch die Abdeckvorrichtung in diesem Bereich verjüngen. Dadurch werden Nasenlöcher und Kinn in vorteilhafter Weise nicht von der Folie (230) bedeckt. Um jedoch die bekannte Grundform zu erhalten und um eine verbesserte Abdeckung zu schaffen, sind die konkaven Ausnehmungen beider Spannelemente (210, 220) mit zusätzlichen Abdeckungen (231, 232, 233) versehen, die durch zusätzliche dünne Streben (261, 262, 263) gehalten werden. Durch die Streben (261, 262, 263) werden die zusätzlichen Abdeckungen (231, 232, 233) in einer Position gehalten, die weder im Bereich der Nase noch im Bereich des Kinns stört und die die Lippe mit abdecken.

Figur 5 zeigt die Abdeckvorrichtung (200) aus Figur 4 in der Seitenansicht. Zu sehen sind wieder die beiden Spannelemente (210,220) mit der dazwischen liegenden Folie (230). Das Vestibulär-Spannelement (220) hat neben den beiden intraoralen Spannabschnitten (223) einen Abschnitt (221), der eine konkave Einbuchtung bildet und somit einen Richtung anterior gebogenen Abschnitt darstellt, der bei eingesetzter Abdeckvorrichtung in sagittaler Richtung anterior der Umschlagfalte des Vestibulum oris verläuft. Auch das Lippen-Spannelement (210) hat eine Einbuchtung (211), die in Richtung der Einbuchtung (221) des Vestibulär-Spannelements (220) gerichtet ist.

Zu sehen sind auch wieder zwei zusätzlichen Abdeckungen (231, 233) mit den entsprechenden Haltestreben (261, 263).

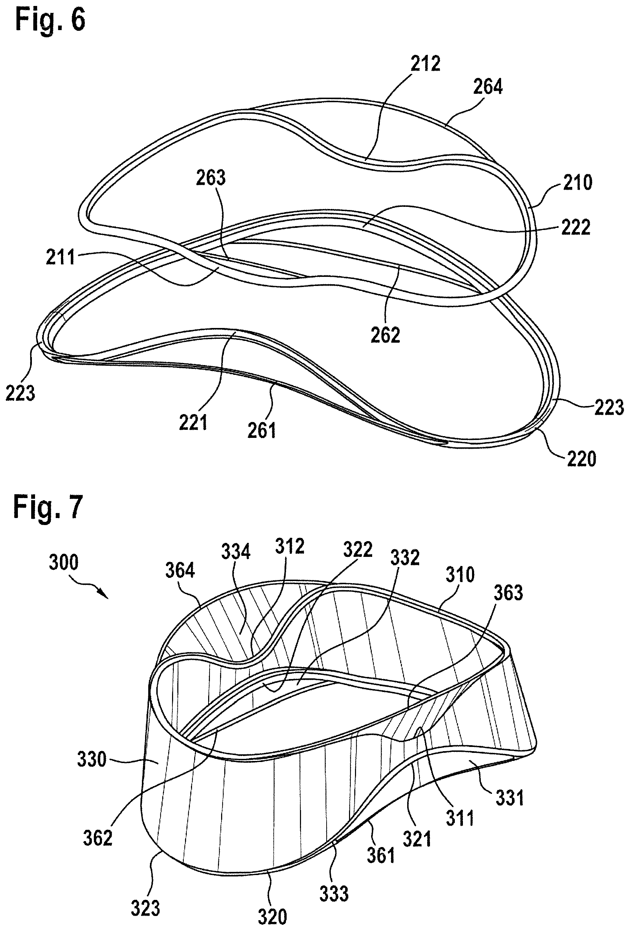

Figur 6 zeigt die beiden Spannelemente (210,220) der Abdeckvorrichtung aus den Figuren 4 und 5. Das Vestibulär-Spannelement (220) hat zwei intraorale Spannabschnitte (223) und zwei anterior gebogene Abschnitte (221,222), die mit Haltestreben (261, 262) versehen sind. Auch das Lippen-Spannelement (210) hat zwei zum Vestibulär-Spannelement (220) gebogene Abschnitte (211,212), die mit Haltestreben (263, 264) versehen sind.

Der am meisten anterior liegende Punkt der Abschnitte (221,222) des Vestibulär-Spannelements (220) hat bei planer aber ungespannter Folie einen Abstand von etwa 12 mm zu dem Lippen-Spannelement (210).

Figur 7 zeigt eine weitere alternative Ausführungsform der Abdeckvorrichtung (300), die wieder ein Lippen-Spannelement (310), ein Vestibulär-Spannelement (320) und eine Folie (330) umfasst. Das Vestibulär-Spannelement (320) hat wieder eine dreidimensionale Grundform mit zwei Abschnitten (321,322), die in Richtung des Lippen-Spannelements (310) gerichtet sind und dadurch die Abdeckvorrichtung in diesem Bereich verjüngen.

Wenn nun die Abdeckvorrichtung (300) verwendet wird, wird das Vestibulär-Spannelement (320) in den Mund eingeführt, so dass die beiden Bereiche oder Spannabschnitte (323) des Spannelements (320) im Bereich der Molaren in das Vestibulum oris einliegen und an der Wange anliegen. Durch die gezeigte Formgebung liegen dagegen die weiteren Bereiche (321, 322) nicht im Vestibulum oris, sondern verlaufen in sagittaler Richtung anterior des Vestibulum oris. Dabei kann je nach Formgebung der Verlauf der anterior gebogenen Abschnitte (321 und 322) intraoral entlang der Lippe oder extraoral vorgesehen sein, wobei vorliegend eine Ausführungsform für einen extraoralen Verlauf gezeigt ist.

Zusätzlich hat auch das Lippen-Spannelement (310) eine dreidimensionale Grundform mit zwei Abschnitten (311,312), die in Richtung des Vestibulär-Spannelements (320) gerichtet sind und dadurch die Abdeckvorrichtung in diesem Bereich verjüngen. Dadurch werden Nasenlöcher und Kinn in vorteilhafter Weise nicht von der Folie (330) bedeckt. Um jedoch die bekannte Grundform zu erhalten und um eine weitere Abdeckung zu schaffen, sind die konkaven Ausnehmungen beider Spannelemente (310, 320) mit zusätzlichen Abdeckungen (331, 332, 333, 334) versehen, die durch zusätzliche dünne Streben (361, 362, 363, 364) gehalten werden.

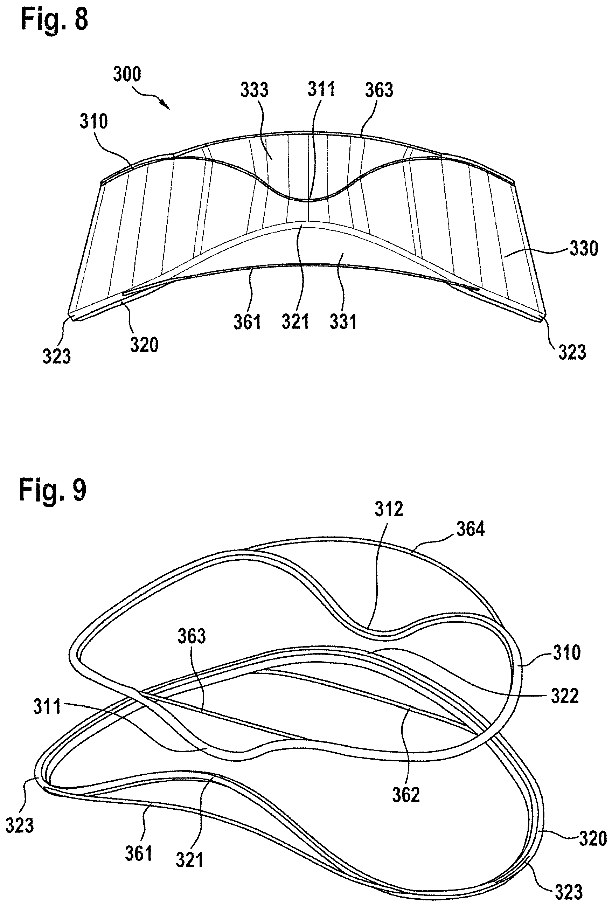

Figur 8 zeigt die Abdeckvorrichtung (300) aus Figur 7 in der Seitenansicht. Zu sehen sind wieder die beiden Spannelemente (310,320) mit der dazwischen liegenden Folie (330). Das Vestibulär-Spannelement (320) hat neben den beiden intraoralen Spannabschnitten (323) einen Abschnitt (321), der eine konkave Einbuchtung bildet und somit einen Richtung anterior gebogenen Abschnitt darstellt, der bei eingesetzter Abdeckvorrichtung in sagittaler Richtung anterior der Umschlagfalte des Vestibulum oris verläuft. Auch das Lippen-Spannelement (310) hat eine Einbuchtung (311), die in Richtung der Einbuchtung (321) des Vestibulär-Spannelements (320) gerichtet ist.

Zu sehen sind auch wieder zwei zusätzlichen Abdeckungen (331, 333) mit den entsprechenden Haltestreben (361, 363).

Figur 9 zeigt die beiden Spannelemente (310,320) der Abdeckvorrichtung aus den Figuren 7 und 8. Das Vestibulär-Spannelement (320) hat zwei intraorale Spannabschnitte (323) und zwei anterior gebogene Abschnitte (321,322), die mit Haltestreben (361, 362) versehen sind. Auch das Lippen-Spannelement (310) hat zwei zum Vestibulär-Spannelement (320) gebogene Abschnitte (311,312), die mit Haltestreben (363, 364) versehen sind.

Der am meisten anterior liegende Punkt der Abschnitte (321,322) des Vestibulär-Spannelements (320) hat bei planer aber ungespannter Folie einen Abstand von etwa 4 mm zu dem Lippen-Spannelement (310).

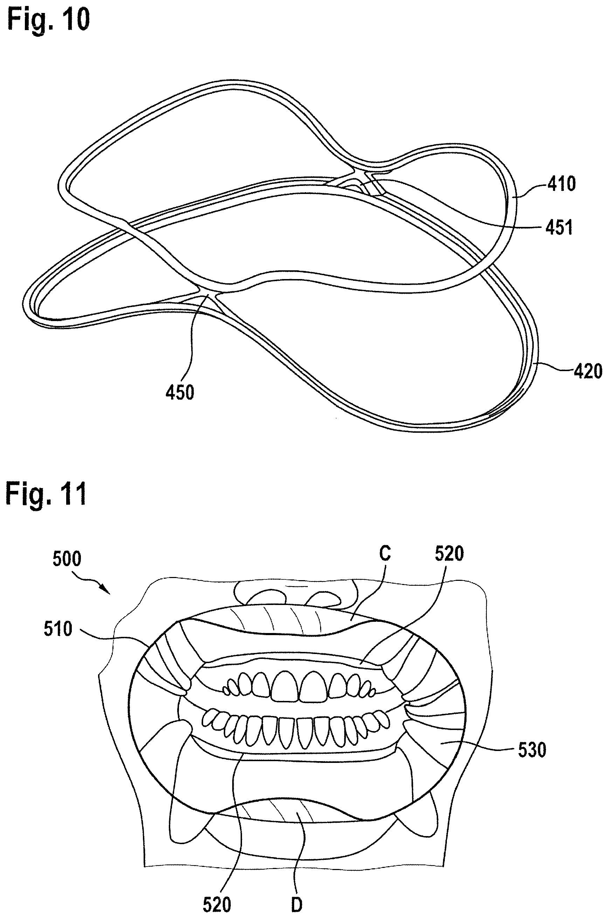

Figur 10 zeigt die beiden Spannelemente (410,420) in einer weiteren Ausführungsform, bei der die beiden Spannelemente (410,420) an den jeweils konkaven Einbuchtungen miteinander verbunden sind und die beiden Verbindungsstellen (450, 451) kreuzungspunktartig ausgebildet sind. In dieser Ausführungsform können die beiden Spannelemente (410,420) in vorteilhafter Weise einstückig hergestellt werden.

Figur 11 zeigt den Vergleich der Abdeckvorrichtung (500) mit einer Abdeckvorrichtung aus dem Stand der Technik während der Verwendung. Die Abdeckvorrichtung (500) besteht aus einem Lippen-Spannelement (510), einem Vestibulär-Spannelement (520) und einer Folie (530). Bei Abdeckvorrichtungen aus dem Stand der Technik sind beide Spannelemente ringförmig, im wesentlichen kreisringförmig. Dadurch liegt der innere Spannring komplett im Vestibulum oris und kann dort Druckstellen verursachen. Der äußere Spannring reicht bis zur Nase und zum Kinn.

Bei der gezeigten Ausführungsform sind sowohl das äußere Lippen-Spannelement (510) als auch das Vestibulär-Spannelement (520) so geformt, dass sie sich im oberen und unteren Bereich annähern.

Dies hat zwei Vorteile: Zum einen liegt das Vestibulär-Spannelement (520) im Frontalbereich nicht auf der den Kieferknochen bedeckenden Schleimhaut auf, sondern verläuft in Richtung anterior über die Lippe nach außen. Zum anderen werden durch die Einbuchtungen des Lippen-Spannelements (510) im Gegensatz zu Abdeckvorrichtungen aus dem Stand der Technik die Bereiche unter der Nase und am Kinn (C, D) nicht durch die Folie (530) bedeckt, so dass ein einfaches Atmen durch die Nase möglich ist und das Lippen-Spannelement (510) nicht auf das Kinn drückt, wenn dieses größer ausgebildet ist.

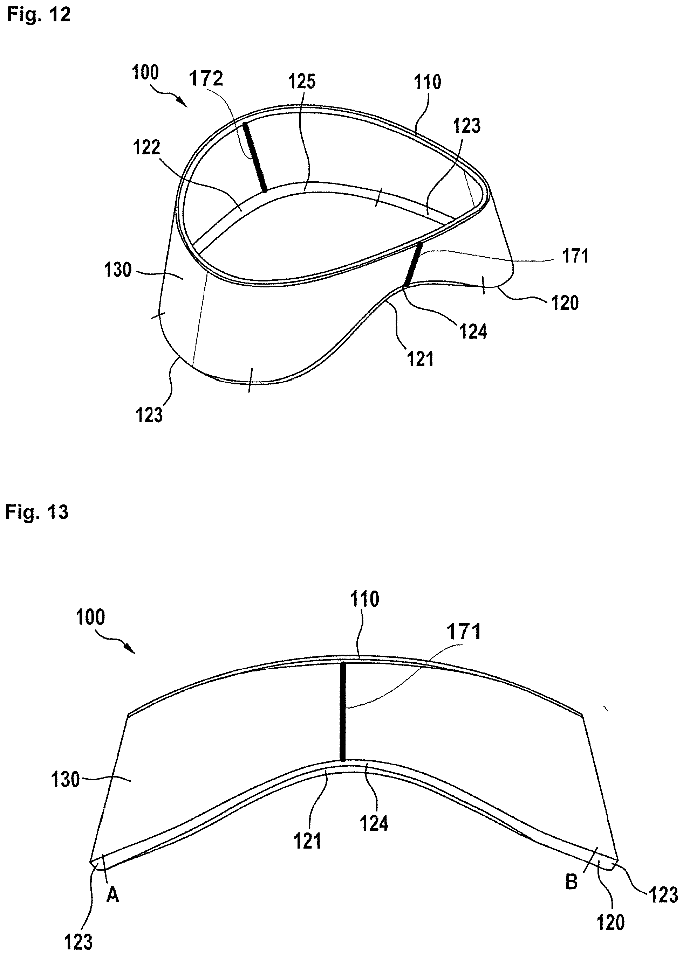

Figur 12 zeigt eine Abdeckvorrichtung (100) wie in Figur 1a gezeigt. Zu sehen sind wieder das Lippen-Spannelement (110), das Vestibulär-Spannelement (120) und die Folie (130). Das Vestibulär-Spannelement (120) hat vier Abschnitte (121, 122, 123), wobei die Abschnitte (121, 122) jeweils konkave Einbuchtungen (124, 125) bilden. Im Bereich dieser konkaven Einbuchtungen (124, 125) ist das Vestibulär-Spannelement (120) über Stege oder Bänder (171, 172) mit dem Lippen-Spannelement (110) verbunden.

Die Stege (171, 172) sind im Gegensatz zu der Folie (130) nicht dehnbar, so dass die Stege (171, 172) im Bereich der konkaven Einbuchtungen (124, 125) einen festen Abstand zwischen dem Vestibulär-Spannelement (120) und dem Lippen-Spannelement (110) definieren. Über die Stege (171, 172) kann das Lippen-Spannelement (110) das Vestibulär-Spannelement (120) bei der Verwendung der Abdeckvorrichtung (100) vom Zahnfleisch wegziehen.

Figur 13 zeigt die Abdeckvorrichtung (100) aus Figur 12 in der Seitenansicht. Zu sehen sind wieder die beiden Spannelemente (110, 120) mit einer zwischenliegenden Folie 130). Das Vestibulär-Spannelement hat neben den beiden intraoralen Spannabschnitten (123) ein zwischen den Punkten A und B verlaufenden Abschnitt (121), der eine konkave Einbuchtung (124) bildet und somit einen in Richtung anterior gebogenen Abschnitt darstellt, der bei eingesetzter Abdeckvorrichtung in sagittaler Richtung anterior der Umschlagfalte des Vestibulum oris verläuft. In diesem Bereich ist das Vestibulär-Spannelement (120) über einen Steg (171) mit dem Lippen-Spannelement (110) verbunden.

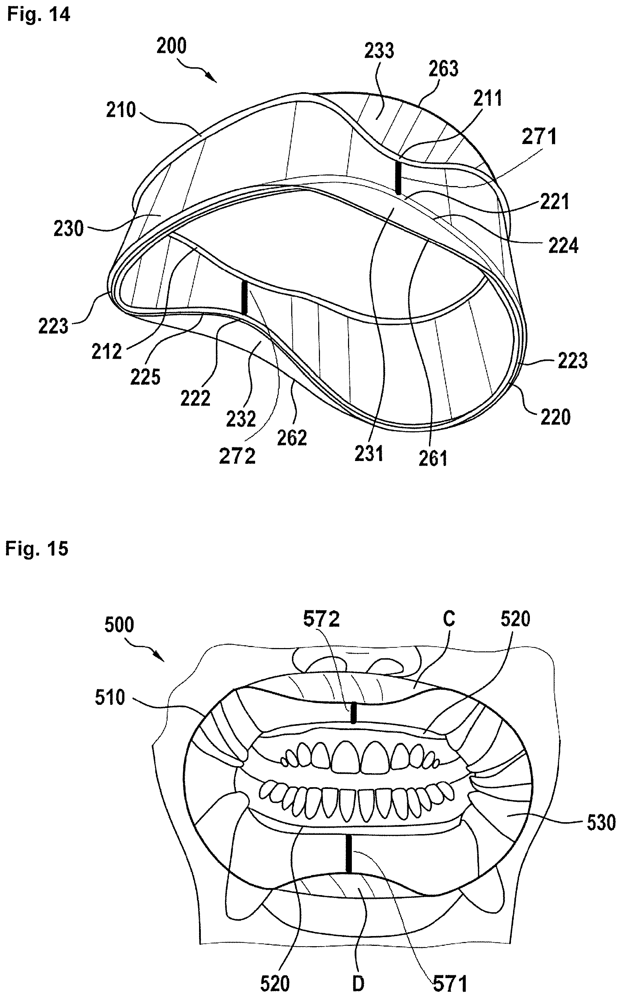

Figur 14 zeigt die alternative Ausführungsform der Abdeckvorrichtung (200) aus Figur 4. Es wird bei dem grundsätzlichen Aufbau auf die Beschreibung der Figur 4 verwiesen. Zusätzlich weist die Abdeckvorrichtung (200) zwei Stege (271, 272) auf, die die beiden Spannelemente (210, 220) im Bereich der konkaven Einbuchtungen (224, 225) miteinander verbinden.

Figur 15 zeigt wie Figur 11 einen Vergleich der Abdeckvorrichtung (500) mit einer Abdeckvorrichtung aus dem Stand der Technik während der Verwendung. Die Abdeckvorrichtung (500) besteht aus einem Spannelement (510), einem Vestibulär-Spannelement (520) und einer Folie (530). Die beiden Spannelemente (510, 520) sind über Stege (571, 572) miteinander verbunden und zwar im mittleren Bereich der Lippen, also den konkaven Einbuchtungen der Spannelemente (510, 520). Durch die Stege (571, 572) zieht das äußere Spannelement (510) das innere Spannelement (520) vom Zahnfleisch weg, so dass Druckstellen noch besser vermieden werden. Wie bei Figur 11, werden die Bereiche unter der Nase und am Kinn (C, D) nicht durch die Folie (530) bedeckt.

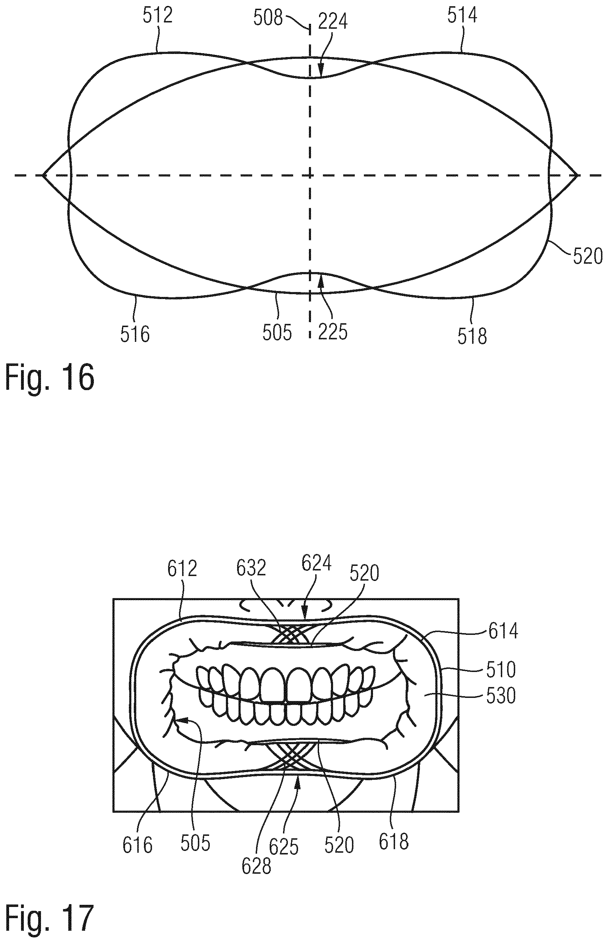

Eine Ausgestaltung ist aus Figur 16 schematisch ersichtlich. Es ist eine Mundöffnung 505 schematisch als spitzes Oval dargestellt. Diese Form entspricht einem etwa zu einem Drittel bis halb geöffneten Mund. Ein stärker geöffneter Mund lässt sich eher als Oval beschreiben. Diese Form entspricht dann eher der in Figur 11 dargestellten.

Es versteht sich, dass die Darstellung und die Formbeschreibung hier stark schematisierend ist. In der Praxis entspricht keine oder nahezu keine natürliche Form einer exakten geometrischen Form.

Der Mundöffnung 505 überlagert ist ein Vestibulär-Spannelement 520 in Figur 16 dargestellt. Dieses ist in dieser Form im entspannten Zustand.

In der Mitte, also in der Sagittalebene 508 und etwas rechts und links dieser, sind Einbuchtungen 224 und 225 vorgesehen. Diese erstrecken sich aufeinander zu. In einer modifizierten Ausgestaltung erstrecken sie sich in Richtung anterior, also zum hier nicht dargestellten Lippen-Spannelement hin.

Weiter lateral der Einbuchtung 224 sind Ausbuchtungen 512 und 514 ausgebildet, und weiter lateral der Einbuchtung 225 Ausbuchtungen 516 und 518. Wie aus Figur 16 ersichtlich ist, bildet das Spannelement 520 so in etwa ein Rechteck mit abgerundeten Ecken ab, wobei insbesondere der Radius der Ecken - also der Ausbuchtungen 512 bis 518 - zwischen 1 cm und 7 cm, insbesondere 2 bis 4 cm, ist.

Das Spannelement 520 gemäß Figur 16 ist nicht oval, und erst recht nicht kreisringförmig. Vielmehr erstrecken sich die Ausbuchtungen 512 bis 518 in Bereiche außerhalb des Mundovals 505, und das Spannelement 520 ist zum Mundoval inkongruent oder geometrisch unähnlich.

Nachdem es hier um das Vestibulär-Spannelement 520 geht, liegt dieses in eingesetztem Zustand mit den Ausbuchtungen 512 bis 518 innen an den Lippen und der Wange an, und zwar an den Stellen, an denen Ausbuchtungen 512 bis 518 ausgebildet sind.

Hier ist eine vergleichsweise große Mundöffnung 505 dargestellt. Deren Größe ist natürlich patientenspezifisch. Wie ersichtlich ist, besteht auch dort eine erhebliche Überlappung zwischen der Mundinnenseite und dem Spannelement 520, und zwar an den Ausbuchtungen 512 bis 518.

Wenn die gleiche Abdeckvorrichtung bei einer kleineren Mundöffnung 505 eingesetzt wird, sind die Ausbuchtungen 512 bis 518 relativ sogar größer.

Dennoch hat die Abdeckvorrichtung in dieser Ausführungsform einen erheblichen Tragekomfort, denn die lateralen Bereiche des Spannelements 520 mit den Ausbuchtungen 512 bis 518 gleiten an den Innenseiten der Wangen schräg nach außen und zugleich nach hinten, also nach distal oder posterior.

Das Einsetzen der Abdeckvorrichtung ist auch bei kleiner Mundöffnung komfortabel möglich. Zweckmäßig wird der laterale Bereich zuerst mittig eingeführt und dann nach lateral geschoben. Bevorzugt so weit, bis der andere laterale Bereich mittennah ist und ebenfalls eingesetzt werden kann. Erst dann erfolgt die Zentrierung, die aber im Grunde durch die Wirkung der elastischen Folie 530 selbsttätig erfolgt.

Das Lippen-Spannelement 510 kann bei der Ausführungsform gemäß Figur 16 eine beliebige Form haben. Hierzu wird auf die Darstellung gemäß den Figuren 1 bis 15 verwiesen. Es kann aber auch die gleiche Form wie das Vestibulär-Spannelement 520 haben, oder zu diesem kongruent sein, oder eine geringe Formabweichung von z.B. 10 % gegenüber diesem haben.

Bei dieser Ausführungsform entfallen die Einbuchtungen 224 und 225 gemäß Figur 16. Das Vestibulär-Spannelement 520 erstreckt sich mit einem geraden oder im wesentlichen geraden horizontalen Abschnitt zwischen den oberen Ausbuchtungen 512 und 514 einerseits, und den unteren Ausbuchtungen 516 und 518 andererseits.

Auch Mischformen sind möglich, also solche, bei denen ein gerader Abschnitt mit einer der Einbuchtungen 224 oder 225 kombiniert wird.

In Figur 17 ist eine weitere Ausführungsform der Abdeckvorrichtung dargestellt. Bei dieser Ausführungsform ist das dargestellte Lippen-Spannelement 510 kongruent oder geometrisch ähnlich zum nur zum geringen Teil ersichtlichen Vestibulär-Spannelement 520.

Durch den nach radial außen wirkenden Zug durch die Folie 530 wird die Mundöffnung 505 verformt.

Auch bei der Ausführungsform gemäß Figur 17 ist das vestibulär-Spannelement 520 inkongruent und zudem geometrisch unähnlich zur ovalen oder spitzovalen Form der Mundöffnung 505.

Die Ausbuchtungen 512, 514, 516 und 518 erstrecken sich entsprechend den ersichtlichen Ausbuchtungen 612, 614, 616 und 618 radial nach außen und konvex und erstrecken sich innen an den Wangen des Patienten entlang nach lateral.

Die Ausbuchtungen 512, 514, 516 und 518 erstrecken sich als Ausbuchtungsecken voneinander in 4 Raumrichtungen divergierend, im Beispielsfalle nach links/oben, rechts/oben, links/unten und rechts/unten. Sie erstrecken sich in schrägem Winkel, sowohl zur Horizontalen als auch zur Vertikalen, in Bereiche innen an den Wangen entlang, die besonders gut schmerzfrei nachgiebig sind.

Durch die bevorzugt vorgesehenen Einbuchtungen 524 und 525 (Figur 16) des Vestibulär-Spannelements, entsprechend den Einbuchtungen 624 und 625 des Lippen-Spannelements, werden die Lippenbändchen und das Vestibulum oris zudem druckentlastet und geschützt, so dass insgesamt der Tragekomfort der Abdeckvorrichtung gegenüber dem des Standes der Technik wesentlich verbessert ist.

Bei der Ausführungsform gemäß Figur 17 ist im Bereich der Einbuchtung 624 eine Mehrzahl von Rippen der Stegen 632 ausgebildet. Diese können sich parallel zueinander erstrecken in oder an der Folie 530 und von dem Lippen-Spannelement 510 ausgehen. Sie können aber auch voneinander in Richtung des Vestibulär-Spannelements divergieren oder zueinander konvergieren. Sie können aus Folienmaterial bestehen oder aus demgegenüber anderen Material. Sie können gekrümmt sein, und einander kreuzen, sie können aber auch kreuzungsfrei verlaufen. Sie können auch gerade verlaufen.

Eine entsprechende Mehrzahl von Rippen oder Stegen 628 ist an der Einbuchtung 625 ausgebildet. Für diese gelten sinngemäß die gleichen Möglichkeiten der Ausgestaltung.

## Patentansprüche

1. Abdeckvorrichtung, insbesondere zum Abdecken der Lippen und Mundwinkel und zum Abhalten der Lippen, Wangen und Mundwinkel von den Zahnreihen im Mund eines Patienten, mit einem elastischen Lippen-Spannelement (110, 210, 310)mindestens einem elastischen Vestibulär-Spannelement (120, 220, 320) und mit einer die Spannelemente verbindenden Folie (130, 230, 330), wobei die Spannelemente entlang zweier gegenüberliegender Endbereiche der Folie angeordnet sind, wobei die Spannelemente (110,210,310;120, 220, 320) elastisch verformbar sind und in entspanntem Zustand die Folie (130,230,330) aufspannen, insbesondere in Ringform oder Röhrenform, **dadurch gekennzeichnet, dass** das Vestibulär-Spannelement (120, 220, 320) im entspannten Zustand vier Ausbuchtungen oder Ausbuchtecken (512,514,516,518) aufweist, die gegenüber einem Spitzoval (505) oder Oval konvex nach außen vorspringen, und dass die Form des Vestibulär-Spannelements (520) gegenüber dem Spitzoval (505) oder Oval inkongruent oder geometrisch unähnlich ist.

2. Abdeckvorrichtung nach Anspruch 1, **dadurch gekennzeichnet, dass** das Vestibulär-Spannelement (520) in der Draufsicht im wesentlichen die Form eines Rechtecks mit abgerundeten Ecken hat, wobei insbesondere der Radius der Ecken zwischen 0,1 cm und 7 cm, insbesondere 0,2 bis 4 cm, ist.

## Claims

1. A covering device, in particular for covering the lips and labial angles and for holding the lips, cheeks and labial angles away from the rows of teeth in the mouth of a patient, comprising an elastic lip clamping element (110, 210, 310), at least one elastic vestibular clamping element (120, 220, 320) and a film (130, 230, 330) connecting the clamping elements, wherein the clamping elements are arranged along two opposite end regions of the film, wherein the clamping elements (110, 210, 310; 120, 220, 320) are elastically deformable and span the film (130, 230, 330) in a relaxed state, in particular in the shape of a ring or the shape of a tube, **characterized in that** the vestibular clamping element (120, 220, 320) comprises four bulges or bulging corners (512, 514, 516, 518) which project convexly towards the outside compared to a pointed oval (505) or an oval, and **in that** the shape of the vestibular clamping element (520) is incongruent or geometrically dissimilar compared to the pointed oval (505) or oval.

2. The covering device as claimed in claim 1, **characterized in that** the vestibular clamping element (520) has substantially the shape of a rectangular with rounded corners in the top view, wherein in particular the radius of the corners is between 0.1 cm and 7 cm, in particular 0.2 to 4 cm.

## Revendications

1. Dispositif de recouvrement, en particulier pour recouvrir les lèvres et les coins de la bouche et pour maintenir les lèvres, les joues et les coins de la bouche à l'écart des rangées de dents dans la bouche d'un patient, a comprenant un élément de serrage élastique pour les lèvres (110, 210, 310) avec au moins un élément de tension vestibulaire élastique (120, 220, 320) et avec une feuille reliant les éléments de serrage (130, 230, 330), où les éléments de serrage sont disposés le long de deux zones d'extrémité opposées du film, où les éléments de serrage (110, 210, 310; 120, 220, 320) sont élastiquement déformables et, à l'état détendu, tendent la feuille (130, 230, 330), en particulier sous forme d'anneau ou de forme tubulaire, **caractérisé en ce que** l'élément de tension vestibulaire (120, 220, 320) à l'état détendu présente quatre renflements ou coins de renflement (512, 514, 516, 518) qui font saillie de manière convexe vers l'extérieur par rapport à un ovale pointu (505) ou un ovale, et **en ce que** la forme de l'élément de tension vestibulaire (520) est incongrue ou géométriquement dissemblable par rapport à l'ovale pointu (505) ou l'ovale.

2. Dispositif de recouvrement selon la revendication 1, **caractérisé en ce que** l'élément de tension vestibulaire (520) quand on le regarde en plan se présente essentiellement sous la forme d'un rectangle à angles arrondis, où en particulier le rayon des angles est compris entre 0,1 cm et 7 cm, en particulier entre 0,2 et 4 cm.
